(19)

**Europäisches Patentamt**
**European Patent Office**
**Office européen des brevets**

(11) **EP 2 381 275 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **10160982.4**

(22) Anmeldetag: **26.04.2010**

(51) Int Cl.:
**G01V 8/12** (2006.01)

(54) **Optoelektronischer Sensor und Verfahren zum Senden und Empfangen von Licht**

Optoelectronic sensor and method for transmitting and receiving light

Capteur optoélectronique et procédé d'émission et de réception de lumière

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**26.10.2011 Patentblatt 2011/43**

(73) Patentinhaber: **Sick AG**
**79183 Waldkirch (DE)**

(72) Erfinder:
• **Merettig, Gerhard**
**79350, Sexau (DE)**
• **Waslowski, Kai**
**79312, Emmendingen (DE)**
• **Hauske, Maximilian**
**68165, Mannheim (DE)**
• **Elsner, Jens**
**76135, Karlsruhe (DE)**

(74) Vertreter: **Hehl, Ulrich**
**SICK AG**
**Intellectual Property**
**Erwin-Sick-Strasse 1**
**79183 Waldkirch (DE)**

(56) Entgegenhaltungen:
EP-A1- 2 015 110   EP-A2- 1 118 881
DE-A1- 4 422 497   DE-A1- 10 241 810

EP 2 381 275 B1

**Beschreibung**

Die Erfindung betrifft einen optoelektronischen Sensor und ein Verfahren zum Senden und Empfangen von Licht nach dem Oberbegriff von Anspruch 1 beziehungsweise 11.

Zahlreiche optoelektronische Sensoren arbeiten mit dem Prinzip, einen Sendelichtstrahl aktiv auszusenden und in einem Detektor wieder zu empfangen. Ein sehr häufig eingesetzter derartiger Sensor ist eine Lichtschranke, welche die Anwesenheit eines Objekts daran feststellt, ob der Lichtstrahl unterbrochen ist oder nicht. Lichtschranken sind als Einweglichtschranken bekannt, in denen der Lichtempfänger dem Lichtsender gegenüber angeordnet ist und der Lichtstrahl dazwischen einen Überwachungsbereich aufspannt. Weiterhin gibt es Reflexionslichtschranken, in denen Lichtsender und Lichtempfänger auf der gleichen Seite angeordnet sind und der Lichtstrahl mit Hilfe eines Reflektors, häufig eines Retroreflektors, zurückgeworfen wird und somit den Überwachungsbereich zweimal durchquert. Ähnlich wie eine Reflexionslichtschranke ist ein Lichttaster aufgebaut, wobei der Lichttaster nicht auf einen kooperativen Reflektor, sondern in den freien Raum gerichtet ist, und somit in Umkehrung des Lichtschrankenprinzips Sendelicht gerade dann empfängt, wenn ein Objekt in den Sendestrahl tritt. Für alle diese Sensortypen ist auch bekannt, mehrere Sensoren parallel zueinander anzuordnen und so ein Lichtgitter oder ein tastendes Lichtgitter zu bilden.

Eine besondere Form der Lichtschranke ist eine Datenlichtschranke. Dabei wird dem Lichtstrahl eine zu übertragende Information aufmoduliert und empfangsseitig dekodiert. Datenlichtschranken sind sehr störfest gegenüber elektromagnetischer Strahlung. Diese Robustheit gegenüber Funktechniken überwiegt in einigen Anwendungen das Erfordernis einer Sichtlinie zwischen Sender und Empfänger.

In realen Umgebungen müssen die Sensoren mit einer sehr großen Signaldynamik umgehen können. Zu den möglichen Störquellen zählen Umgebungslicht und Sonneneinstrahlung, aber auch weitere und insbesondere baugleiche Sensoren. Je größer zudem die zu erzielende Reichweite ist, desto schwieriger wird es für den Sensor, das eigene Sendesignal sicher zu detektieren.

Es ist bekannt, das Sendelicht zu codieren, um so zwischen Sendelicht und Fremdlicht unterscheiden zu können. Besonders robust und störresistent sind Pseudozufallscodes. Beispielsweise ist in der EP 2 015 110 A1 ein optoelektronischer Sensor beschrieben, bei dem das ausgesandte Licht mit einem Pseudozufallsrauschcode moduliert wird. Empfangsseitig ist der Pseudozufallscode bekannt, so dass dort die Sendesequenz wieder decodierbar ist. Dadurch wird in einem Bandspreizverfahren die Sendeenergie spektral verteilt, so dass der Einfluss gerade schmalbandiger Störer vermindert wird. Da es kein negatives Lichtsignal gibt, werden die verwendeten Codesequenzen, die üblicherweise die Werte $\{-1,1\}$ annehmen, zunächst mit einem Offset beaufschlagt und dann renormiert, so dass die Codesequenz als unipolares Signal mit den Werten $\{0,1\}$ übertragen werden kann. Außerdem ist eine optische Synchronisation zwischen Sender und Empfänger vorgesehen, bei welcher empfangsseitig ein Maximum der Kreuzkorrelation zwischen dem ihm bekannten Pseudozufallsrauschcode und dem Empfangssignal aufgefunden wird.

Jede in einem optoelektronischen Sensor verwendete Lichtquelle hat eine begrenzte Leistung, die für eine zuverlässige Funktion nicht überschritten werden darf. Der Sendestrom der Lichtquelle und damit die Amplitude der Pulse wird deshalb so eingestellt, dass eine Überlastung vermieden wird. Dabei bedeutet Überlastung beispielsweise eine Überhitzung. Im Falle von Laserlichtquellen kann aber auch die Augenschutzklasse und nicht die Spezifikation des Bauteils selbst das verfügbare Sendelichtbudget begrenzen.

Die Begrenzung des Sendestroms schützt zwar die Lichtquelle, beschränkt aber gleichzeitig das Signal-Rauschverhältnis und damit letztlich die mögliche Reichweite des Sensors bei gegebener Lichtquelle oder dessen Robustheit gegenüber Störquellen.

Es ist daher Aufgabe der Erfindung, die optische Übertragung einer Codefolge weiter zu verbessern.

Diese Aufgabe wird durch einen optoelektronischen Sensor gemäß Anspruch 1 und ein Verfahren zum Senden und Empfangen von Licht gemäß Anspruch 11 gelöst. Dabei geht die Erfindung von dem Grundgedanken aus, dass maßgeblich für die Überlastung des Lichtsenders nicht die maximale Dauerstrichleistung, sondern die sogenannte Pulsbelastbarkeit ist. Denn im Pulsbetrieb, der für das Aussenden einer Codefolge verwendet wird, entstehen jeweils bei der Übertragung der logischen Nullen Lücken, welche den Lichtsender entlasten. Die Erfindung nutzt dieses frei gewordene Sendebudget aus und schlägt es den Amplituden der Pulse bei Übertragung von logischen Einsen zu. Dabei wird die Spezifikation der Lichtquelle herangezogen, um nichtlineare Zusammenhänge zwischen den Sendepausen und der dadurch ermöglichten Erhöhung der Amplituden zu berücksichtigen.

Die Erfindung hat den Vorteil, dass das Signal-Rauschverhältnis durch die höheren Amplituden der ausgesandten Pulse verbessert wird. Dadurch ist der Einsatz in stärker gestörten Umgebungen möglich. Alternativ kann bei gleicher Bauweise eine größere Reichweite erzielt oder bei gleicher Reichweite eine kostengünstigere, leistungsschwächere Lichtquelle verwendet werden.

Das Ansteuern des Lichtsenders erfolgt bevorzugt durch einen entsprechend der Codefolge modulierten Sendestrom für die Lichtquelle des Lichtsenders. Dabei werden spiegelbildlich zu den als Pulse codierten logischen Einsen die logischen Nullen als Pulspausen codiert. Die Bedeutung der logischen Null und der logischen Eins ist reine Konvention und vertauschbar.

Die Codefolge ist bevorzugt pseudozufällig. Damit werden die Vorteile des Bandspreizverfahrens und damit eine besonders ausgeprägte Verbesserung des Signal-Rauschverhältnisses erzielt. Die Sendefolge sieht dabei natürlich nur zufällig aus, die ursprüngliche Information ist weiterhin enthalten und durch Decodieren reproduzierbar.

Die Steuerungseinheit ist bevorzugt dafür ausgebildet, anhand des Empfangssignals die Anwesenheit oder Abwesenheit eines Objekts in einem Überwachungsbereich festzustellen, in den das Sendelicht von dem Lichtsender aussendbar ist. Dies ist eine der häufigsten Anwendungen für einen optoelektronischen Sensor, der dann meist das Ergebnis seiner Überwachung in Form eines binären Objektfeststellungssignals an einem Ausgang zur Verfügung stellt. In der Automatisierungstechnik wird dadurch beispielsweise ein Arbeitsschritt eingeleitet oder eine Sortierung vorbereitet. In der Sicherheitstechnik ist die häufigste Anwendung die Überwachung von Schutzfeldern auf unzulässige Eingriffe, wenn beispielsweise eine Bedienperson einer gefährlichen Maschine zu nahe kommt und diese zur Vermeidung von Unfällen angehalten oder anderweitig abgesichert wird.

Die Steuerungseinheit ist bevorzugt dafür ausgebildet, das Empfangssignal mit der Codefolge zu demodulieren. So wird das ursprüngliche Sendesignal zurückgewonnen. Dazu ist empfangsseitig diejenige Folge bekannt, mit der das Sendesignal in die Codefolge umgewandelt wurde. Die Steuerungseinheit ist dabei nochmals bevorzugt zweigeteilt in einen sendeseitigen und einen empfangsseitigen Steuerungsteil. Diese können untereinander verbunden sein. Das ist aber nicht zwingend, wenn beispielsweise eine optische Synchronisation vorgenommen wird.

Die Codefolge ist bevorzugt derart in Codeabschnitte unterteilt, dass ein Codeabschnitt jeweils ein Cluster aufeinanderfolgender Einsen sowie ein unmittelbar vorausgehendes und/oder ein unmittelbar nachfolgendes Cluster aufeinanderfolgender Nullen umfasst. So wird direkt das in jeder Pulslücke, in der nur logische Nullen gesendet werden, gewonnene Sendebudget auf die vorangehenden und/oder nachfolgenden Pulse umverteilt. Dabei entsteht ein besonders großer Gewinn im Signal-Rauschverhältnis, während sich zugleich sehr einfach sicherstellen lässt, dass die Lichtquelle nicht überlastet wird.

Alternativ ist die Codefolge in Codeabschnitte gleicher Länge unterteilt. Der Codeabschnitt umfasst dabei 4, 8, 16 oder eine andere Anzahl von Bits. So kann der Code sehr leicht und ohne jegliche Information über seinen Inhalt in Codeabschnitte unterteilt werden. Die Codeabschnitte dürfen dabei nicht zu lang sein, weil sonst der Vorteil der angepassten Pulsamplituden gegenüber einer Begrenzung auf die Gleichstromleistung verloren geht.

Das Auslastungsmaß eines Codeabschnitts ist bevorzugt als Verhältnis der Anzahl Einsen oder der Anzahl Nullen in einem Codeabschnitt zu der Länge des Codeabschnitts bestimmt. Dies ist ein direktes Maß dafür, wie stark die Lichtquelle innerhalb des Codeabschnitts belastet ist. Je weniger Einsen zu übertragen sind, desto höher kann die Amplitude gewählt werden, da der Codeabschnitt entsprechend viele Pulspausen enthält.

Der Lichtsender weist bevorzugt eine Lichtquelle mit einer vorgegebenen Höchstsendeleistung auf. Dabei wird erfindungsgemäß nicht die Dauerstrichleistung herangezogen, sondern die Pulsbelastbarkeit, also die momentane, für die kurzen Pulse benötigte Sendeleistung. Die Lichtquelle ist insbesondere ein Laser oder eine LED, denn diese Halbleiterlichtquellen lassen sich zuverlässig mit kurzen Pulsen ansteuern und sind dabei langlebig und lichtstark.

Die Steuerungseinheit ist bevorzugt dafür ausgebildet, die Amplitude der Pulse unter Beachtung der vorgegebenen Höchstsendeleistung zu variieren. Dadurch werden Überlastungen vermieden, mit der eine zulässige Erwärmung, aber auch beispielsweise eine Augenschutzklasse überschritten würde. Damit wird gleichzeitig auch eine besonders hohe Haltbarkeit der Lichtquelle erreicht.

Die Steuerungseinheit ist bevorzugt dafür ausgebildet, die Amplitude der Pulse entsprechend einer Zuordnungsvorschrift zu variieren, welche einen Skalierungsfaktor für einen Sendestrom der Lichtquelle in Abhängigkeit von dem Auslastungsmaß angibt. Beispielsweise wird in der Steuerungseinheit oder vorab eine Funktion des zulässigen Sendestroms in Abhängigkeit von dem Auslastungsmaß bestimmt. So lässt sich anhand des Auslastungsmaßes eines konkret zu übertragenden Codeabschnitts sofort der gerade noch zulässige und damit das Signal-Rauschverhältnis maximierende Sendestrom ermitteln.

Die Zuordnungsvorschrift ist bevorzugt als Interpolation mehrerer bekannter Wertepaare einer vorgegebenen Höchstleistung bei bekanntem Auslastungsmaß bestimmt. Die Spezifikation einer Lichtquelle gibt meist nur einige wenige Kennlinien an. Die Interpolation sorgt dafür, dass eine passende Amplitude für Pulse in jedem denkbaren Codeabschnitt verfügbar sind.

Vorteilhafterweise ist ein Speicher vorgesehen, in dem die Codefolge bereits mit in Abhängigkeit von dem aus der Anzahl von Nullen und Einsen in dem Codeabschnitt abgeleiteten Auslastungsmaß skaliert abgelegt ist, so dass im Betrieb die zu variierenden Amplituden von der Steuerungseinheit aus dem Speicher auslesbar sind. Damit ist die Steuerungseinheit im Betrieb vollständig von der Vorverarbeitung der Codefolge entlastet und kann direkt die benötigten Sendeströme aus dem Speicher ablesen, beispielsweise einer Wertetabelle.

Der Sensor ist bevorzugt als Einweglichtschranke, Reflexionslichtschranke, Datenlichtschranke, Lichttaster oder Lichtgitter ausgebildet. Alle diese Sensortypen profitieren von dem erfindungsgemäß verbesserten Signal-Rauschverhältnis.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine Blockdarstellung eines erfindungsgemäßen optoelektronischen Sensors;

Fig. 2     ein Ablaufdiagramm der erfindungsgemäßen Codierung beim Senden und Decodierung beim Empfang eines Lichtsignals;

Fig. 3     eine beispielhafte Pulsbelastbarkeit einer Lichtquelle, also Kennlinien des zulässigen Sendestroms bei gegebener Pulsbreite;

Fig. 4     eine aus den Kennlinien gemäß Figur 3 abgeleitete Interpolation, welche dem Auslastungsmaß oder Duty Cycle einen für die Lichtquelle geeigneten Sendestrom zuordnet; und

Fig. 5     eine vergleichende Darstellung des Sendestroms über der Zeit für eine herkömmliche pseudozufällige Folge und die erfindungsgemäß in den Amplituden ihrer Pulse varriierte Sendefolge.

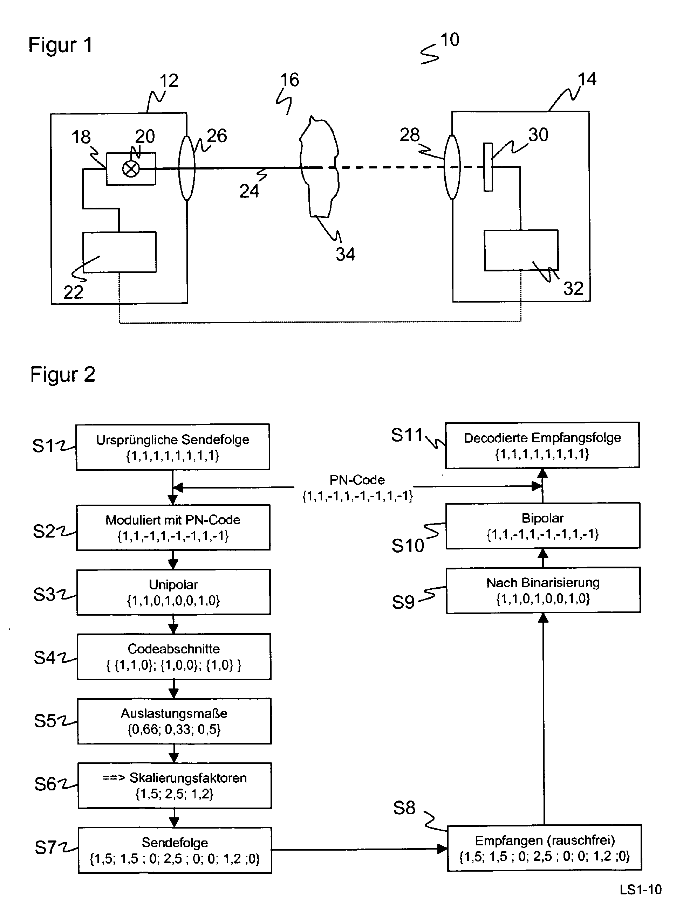

Figur 1 zeigt eine Blockdarstellung einer Ausführungsform eines erfindungsgemäßen Sensors 10 als Einweglichtschranke. Die Erfindung ist aber nicht auf Einweglichtschranken beschränkt und insbesondere auch bei den anderen einleitend genannten Sensortypen einsetzbar.

Der Sensor 10 weist einen Sendeblock 12 und einen Empfangsblock 14 auf, zwischen denen sich ein Überwachungsbereich 16 befindet. Der Sendeblock 12 umfasst einen Lichtsender 18 mit einer Lichtquelle 20, beispielsweise einem Laser oder einer LED, und eine Sende-Steuereinheit 22. Der Lichtsender 18 ist in der Lage, einen Sendelichtstrahl 24 zu erzeugen, der über eine Sendeoptik 26 gebündelt wird. Bei freiem Überwachungsbereich 16 fällt dieser Sendelichtstrahl 24 über eine Empfangsoptik 28 auf einen Lichtempfänger 30 des Empfangsblocks 14, beispielsweise eine Photodiode oder einen pixelaufgelösten Matrixbildsensor. Der einfallende Sendelichtstrahl 24 wird in dem Lichtempfänger in ein elektrisches Empfangssignal umgewandelt, welches von einer Empfangs-Steuereinheit 32 ausgewertet wird.

Befindet sich ein Objekt 34 in dem Überwachungsbereich 16, welches den Sendelichtstrahl 24 unterbricht, so fällt kein Licht auf den Lichtempfänger. Die Empfangs-Steuereinheit 32 erkennt auf diese Weise die Anwesenheit oder Abwesenheit eines Objekts 34 in dem Überwachungsbereich 16. Sende-Steuereinheit 22 und Empfangs-Steuereinheit 32 können wie durch eine gepunktete Linie dargestellt miteinander verbunden sein und sich die Steuerungs- und Auswertungsaufgaben teilen. Alternativ sind Sendeblock 12 und Empfangsblock 14 jeweils autark, und es findet eine optische Synchronisation über den Sendelichtstrahl 24 statt.

Die Sende-Steuereinheit 22 aktiviert den Lichtsender 18 durch Ansteuerung mit einem Sendestrom. Dabei ist kein Dauerstrichbetrieb, sondern ein Pulsbetrieb zum Aussenden von Codefolgen vorgesehen. Die Empfangs-Steuereinheit 32 ist in der Lage, die Codefolge zu decodieren und so die mit dem Sendelichtstrahl 24 übertragene Information zu empfangen beziehungsweise den zugehörigen Lichtsender 18 des Sensors 10 anhand der Codefolge zu identifizieren. Dabei wird die Amplitude der einzelnen Pulse des Sendelichtstrahls 24 variiert, um eine möglichst hohe Sendeleistung innerhalb der zulässigen Pulsbelastbarkeit der Lichtquelle 22 und damit ein verbessertes Signal-Rauschverhältnis zu erzielen.

Figur 2 erläutert dies in einem Ablaufdiagramm der erfindungsgemäßen Codierung beim Senden durch die Sende-Steuerungseinheit 22 und der Decodierung beim Empfangen durch die Empfangs-Steuerungseinheit 32.

In einem ersten Schritt S1 wird eine ursprüngliche Sendefolge festgelegt. Diese ist hier sehr vereinfacht als Abfolge von acht logischen Einsen gewählt. Das soll nur das Prinzip illustrieren, denn in der Praxis werden meist deutlich längere Sendefolgen verwendet. Eine Sendefolge ausschließlich aus logischen Einsen ist zwar nur ein Beispiel, aber durchaus ein wichtiger Anwendungsfall, denn dies entspricht letztlich dem klassischen Dauerstrichbetrieb oder der Information, dass der Lichtsender 18 aktiv und der Sendelichtstrahl 24 nicht unterbrochen ist. Für eine Einweglichtschranke beispielsweise ist dies deshalb eine geeignete Sendefolge. Bei einer Datenlichtschranke andererseits würde die ursprüngliche Sendefolge aus den zu übertragenden Informationsbits bestehen.

In einem zweiten Schritt S2 wird die ursprüngliche Sendefolge mit einer pseusozufälligen Codefolge codiert. Geeignete Codefolgen mit flachem, gleichmäßigen Frequenzspektrum sind an sich bekannt, etwa eine Gold-Folge. Als Codierungsschema ist beispielhaft eine bitweise Multiplikation gewählt.

Da die Lichtquelle 20 nur in ihrer Intensität, nicht aber in ihrem Vorzeichen moduliert werden kann, wird in einem dritten Schritt S3 ein konstanter Offset hinzuaddiert und die entstehende Folge neu normiert, um eine unipolare Codefolge zu erhalten. Alternativ kann auf den dritten Schritt verzichtet werden, indem schon in Schritt S2 eine unipolare Codefolge zur Codierung verwendet wird.

Die entstehende unipolare Codefolge wird in einem vierten Schritt S4 in Codeabschnitte zerlegt. Dazu werden Cluster aus zusammenhängenden Einsen identifiziert und mit jeweils einem nachfolgenden Cluster aus zusammenhängenden Nullen zu einem Codeabschnitt zusammengefasst. Die Anzahl aufeinanderfolgender Einsen ist ein wichtiges Maß für die Belastung der Lichtquelle 20, da ein langer Abschnitt aufeinanderfolgender Einsen zu einer entsprechend andauernden Pulsbelastung der Lichtquelle 20 führt. Es sind aber auch andere Zerlegungen in Codeabschnitte denkbar, beispielsweise durch ein führendes statt eines nachfolgenden Clusters von Nullen, oder durch gleich lange Codeabschnitte einer vorgebbaren Bitlänge. Bei periodischer Wiederholung der Sendefolge werden die letzten und ersten Nullen oder Einsen als ein Cluster zusammengefasst.

In einem fünften Schritt S5 wird für jeden Codeabschnitt ein Auslastungsmaß berechnet. Das Auslastungsmaß lehnt sich an ein lokales Tastverhältnis (duty cycle) an und bewertet, wie viele Pulse in dem Codeabschnitt auszusenden sind und wie lang die nachfolgende Lücke zur Entlastung der Lichtquelle 20 ist. Dazu wird beispielsweise die Anzahl der Einsen in einem Codeabschnitt ins Verhältnis zu der Länge des Codeabschnitts gesetzt. Da durch die Zerlegungsvorschrift jeder Codeabschnitt auch Nullen enthält, ist das Auslastungsmaß eine Zahl kleiner Eins. Je kleiner das Auslastungsmaß, desto größer ist die nachfolgende Lücke zur Übertragung von Nullen, und desto höher kann die Amplitude für die Pulse gewählt werden.

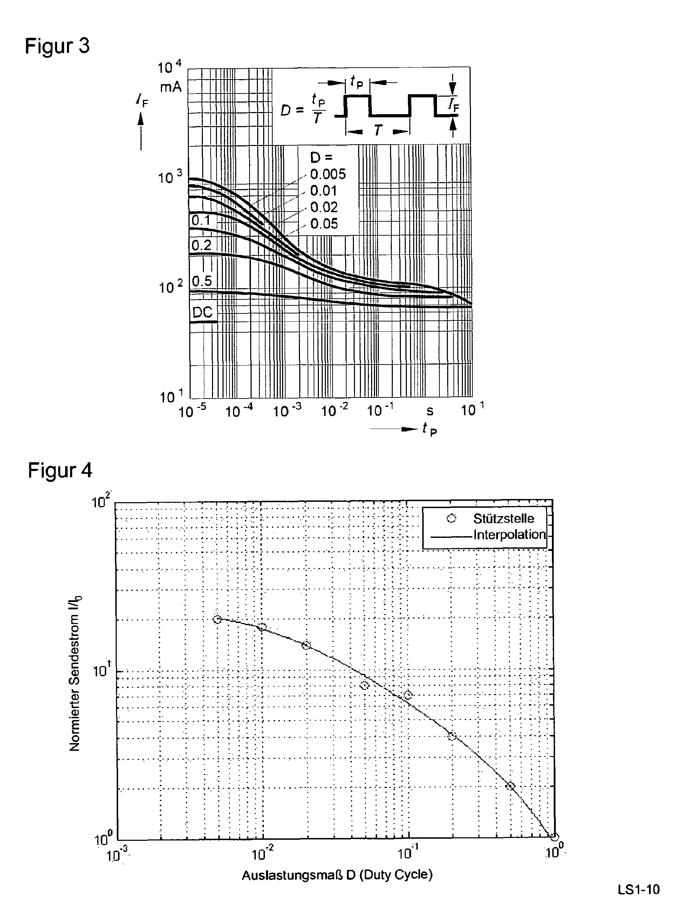

Aus den Auslastungsmaßen werden in einem sechsten Schritt S6 Skalierungsfaktoren errechnet, mit denen die Amplituden der Pulse in dem jeweiligen Codeabschnitt vergrößert werden. Hier besteht ein nichtlinearer Zusammenhang zwischen der effektiven Pulslänge, die durch die Anzahl aufeinanderfolgender Einsen in dem Codeabschnitt bestimmt ist, und ohne unzulässige Zusatzbelastung der Lichtquelle 22 möglichen Verstärkung des Sendestroms. Dieser Zusammenhang zwischen Auslastungsmaß und Amplitude beziehungsweise deren Skalierungsfaktor ist in einer Zuordnungsvorschrift angegeben, die anschließend anhand der Figuren 3 und 4 noch näher erläutert wird.

Die Sendefolge, die über den Sendelichtstrahl 24 von dem Lichtsender 18 ausgesandt wird, ist in einem siebten Schritt S7 durch Skalierung der unipolaren Sendefolge aus Schritt S3 mit den Skalierungsfaktoren aus Schritt S6 gegeben.

Empfangsseitig wird diese Sendefolge in einem achten Schritt S8 von dem Lichtempfänger 30 registriert und in ein elektrisches Signal umgewandelt. Dabei wird zur Vereinfachung der Zahlenbeispiele angenommen, dass die Übertragung rauschfrei ist. Bei einer anschließenden Binarisierung in einem neunten Schritt S9 wird eine unipolare Empfangsfolge erhalten. Durch die erhöhten Amplituden der Pulse ist das Ergebnis der Binarisierung robust auch gegen Rauschterme bei der Übertragung auf der optischen Strecke zwischen den Schritten S7 und S8. Die unipolare Empfangsfolge wird anschließend in einem zehnten Schritt S10 durch Umkehrung des Schrittes S3 zu einer bipolaren Empfangsfolge. In einem abschließenden Schritt S11 wird die Empfangsfolge mit der auch im Empfangsblock 14 bekannten pseudozufälligen Codefolge decodiert, so dass die ursprüngliche Sendefolge zurückgewonnen wird.

Anhand der Figuren 3 und 4 wird nun erläutert, wie die Skalierungsfaktoren im Schritt S6 aus den Auslastungsmaßen gewonnen werden. Figur 3 zeigt eine beispielhafte Pulsbelastbarkeit der Lichtquelle 20 in Form von Kennlinien des zulässigen Sendestroms bei gegebener Pulsbreite. Bei ausreichend kurzer Pulsdauer tp kann der Sendestrom $I_F$ und damit die Amplitude der Pulse gemäß dieser Kennlinien in Abhängigkeit von dem Tastverhältnis D erhöht werden. Dabei ist das Tastverhältnis D ein Auslastungsmaß, welches lokal wie oben beschrieben für die Codeabschnitte bestimmbar ist.

Um die gesuchte Abhängigkeit $I_F(D)$ nicht nur in den durch einzelne Kennlinien gegebenen diskreten Auflösungen zu bestimmen, wird die Funktion $I_F(D)$ anhand der bekannten Wertepaare interpoliert. Zur Modellierung von ohmschen Verlusten und von Verlusten durch den konstanten Spannungsabfalls am Halbleiterübergang der Lichtquelle 20 wird eine lineare Regression mit einem nichtpolynomiellen Term der Form

$$I_F(D) = (a_0 + a_1 \frac{1}{D} + a_2 \frac{1}{\sqrt{D}}) * I_{F0}$$

verwendet. Mit den Zahlenwerten der Figur 3 ergibt sich hieraus beispielsweise

$$I_F(D) = (-1{,}8966 - 0{,}0938 \frac{1}{D} + 2{,}8868 \frac{1}{\sqrt{D}}) * 50mA.$$

Dieses Ergebnis zeigt die Figur 4. Die Stützstellen sind der Figur 3 aus jeweils einer Kennlinie für unterschiedliches D und kurze Pulse mit $t_p < 100\mu s$ entnommen und wurden verwendet, um die oben angegebenen gefitteten Parameter zu ermitteln. Für längere Pulsdauern tp ist das Vorgehen ganz analog, wobei lediglich andere Stützstellen entsprechend der Pulslänge aus der Figur 3 zu entnehmen sind, um sich an die Pulsbelastbarkeit der Lichtquelle 20 anzupassen.

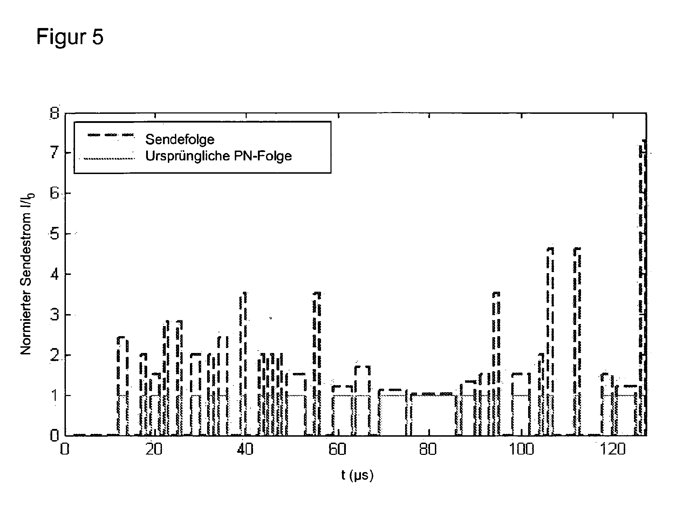

Figur 5 zeigt in einem Beispiel eine vergleichende Darstellung des Sendestroms über der Zeit für die pseudozufällige Ausgangscodefolge mit durchgezogener Linie und die in den Amplituden ihrer Pulse variierte Sendefolge mit gestrichelter Linie. Die Ausgangsfolge oder ursprüngliche PN-Folge ist demnach diejenige Folge, welche im Schritt S2 zur Codierung und im Schritt S11 zur Decodierung verwendet wird. Sie hat nur zwei mögliche Amplituden, nämlich einen normierten Sendestrom $I/I_o$ von Eins während des Aussendens eines Pulses und von Null in den Pausen dazwischen.

Die erfindungsgemäß verwendete Sendefolge, wie sie im Schritt S7 ausgesandt wird, zeigt dagegen unterschiedliche Amplituden für jeden Codeabschnitt, welche in der beschriebenen Weise in Abhängigkeit von dem Auslastungsmaß oder Tastverhältnis des jeweiligen Codeabschnitts und der Pulsbelastbarkeit der Lichtquelle 20 varriiert werden. Für das betrachtete Beispiel ergibt sich ein Gewinn der Signalenergie von 6dB.

Sofern wie in dem Beispiel der Figur 2 die ursprüngliche Sendefolge fix und bekannt ist, etwa weil sie nur aus Einsen besteht, kann die gesamte Codierung bereits vorab berechnet werden. Im Betrieb liegen dann der Sende-Steuerungseinheit 22 die benötigten Sendeströme unmittelbar vor, beispielsweise als Wertetabelle (LookUp-Table) in einem Speicher. Dies ist nur möglich, wenn die ursprüngliche Sendefolge oder zumindest eine Auswahl möglicher ursprünglicher Sendefolgen vorab bekannt ist. Diese Voraussetzung ist bei einer einfachen Lichtschranke gegeben, bei einer Datenlichtschranke dagegen oft nicht.

**Patentansprüche**

1. Optoelektronischer Sensor (10) mit einem Lichtsender (18) zum Aussenden von Sendelicht (24), einem Lichtempfänger (30) zum Umwandeln von detektiertem Sendelicht (24) in ein Empfangssignal sowie einer Steuerungseinheit (22, 32), welche dafür ausgebildet ist, den Lichtsender (18) derart anzusteuern, dass das Sendelicht (24) eine binäre Codefolge, insbesondere eine pseudozufällige Folge, mit als Pulsen codierten logischen Einsen bildet,
   **dadurch gekennzeichnet,**
   **dass** die Steuerungseinheit (32) weiterhin dafür ausgebildet ist, die Amplitude der Pulse für Codeabschnitte der Codefolge in Abhängigkeit von einem aus der Anzahl von Nullen und Einsen in dem Codeabschnitt abgeleiteten Auslastungsmaß zu variieren.

2. Sensor (10) nach Anspruch 1,
   wobei die Steuerungseinheit (32) dafür ausgebildet ist, anhand des Empfangssignals die Anwesenheit oder Abwesenheit eines Objekts (34) in einem Überwachungsbereich (16) festzustellen, in den das Sendelicht (24) von dem Lichtsender (18) aussendbar ist.

3. Sensor (10) nach Anspruch 1 oder 2,
   wobei die Steuerungseinheit (32) dafür ausgebildet ist, das Empfangssignal mit der Codefolge zu demodulieren.

4. Sensor (10) nach einem der vorhergehenden Ansprüche,
   wobei die Codefolge derart in Codeabschnitte unterteilt ist, dass ein Codeabschnitt jeweils ein Cluster aufeinanderfolgender Einsen sowie ein unmittelbar vorausgehendes und/oder ein unmittelbar nachfolgendes Cluster aufeinanderfolgender Nullen umfasst, oder wobei die Codefolge in Codeabschnitte gleicher Länge unterteilt ist.

5. Sensor (10) nach einem der vorhergehenden Ansprüche,
   wobei das Auslastungsmaß eines Codeabschnitts als Verhältnis der Anzahl Einsen oder der Anzahl Nullen in einem Codeabschnitt zu der Länge des Codeabschnitts bestimmt ist.

6. Sensor (10) nach einem der vorhergehenden Ansprüche,
   wobei der Lichtsender (18) eine Lichtquelle (20) mit einer vorgegebenen Höchstsendeleistung aufweist, insbesondere einen Laser oder eine LED, und wobei die Steuerungseinheit (22) dafür ausgebildet ist, die Amplitude der Pulse unter Beachtung der vorgegebenen Höchstsendeleistung zu variieren.

7. Sensor (10) nach einem der vorhergehenden Ansprüche,
   wobei die Steuerungseinheit (22) dafür ausgebildet ist, die Amplitude der Pulse entsprechend einer Zuordnungsvorschrift zu variieren, welche einen Skalierungsfaktor für einen Sendestrom der Lichtquelle (20) in Abhängigkeit von dem Auslastungsmaß angibt.

8. Sensor (10) nach Anspruch 7,
   wobei die Zuordnungsvorschrift als Interpolation mehrerer bekannter Wertepaare einer vorgegebenen Höchstleistung bei bekanntem Auslastungsmaß bestimmt ist.

9. Sensor (10) nach einem der vorhergehenden Ansprüche,
   wobei ein Speicher vorgesehen ist, in dem die Codefolge bereits mit in Abhängigkeit von dem aus der Anzahl von Nullen und Einsen in dem Codeabschnitt abgeleiteten Auslastungsmaß skaliert abgelegt sind, so dass im Betrieb die zu variierenden Amplituden von der Steuerungseinheit (22) aus dem Speicher auslesbar sind.

10. Sensor (10) nach einem der vorhergehenden Ansprüche, der als Einweglichtschranke, Reflexionslichtschranke, Datenlichtschranke, Lichttaster oder Lichtgitter ausgebildet ist.

11. Verfahren zum Senden und Empfangen von Licht, wobei ein Lichtsender (18) Sendelicht (24) als binäre Codefolge, insbesondere pseudozufällige Folge, mit als Pulsen codierten logischen Einsen aussendet und ein Lichtempfänger (30) detektiertes Sendelicht (24) in ein Empfangssignal umwandelt,
**dadurch gekennzeichnet,**
**dass** die Amplitude der Pulse für Codeabschnitte der Codefolge in Abhängigkeit von einem aus der Anzahl von Nullen und Einsen in dem Codeabschnitt abgeleiteten Auslastungsmaß variiert wird.

12. Verfahren nach Anspruch 11, wobei das Sendelicht (24) in einen Überwachungsbereich (16) ausgesandt und anhand des Empfangssignals die Anwesenheit oder Abwesenheit eines Objekts (34) in dem Überwachungsbereich (16) festgestellt wird

13. Verfahren nach Anspruch 11 oder 12, wobei die Amplituden der Pulse entsprechend einer Zuordnungsvorschrift variiert werden, die unter Beachtung einer vorgegebenen Höchstsendeleistung einer Lichtquelle (20) des Lichtsenders (18) einen Sendestrom für die Lichtquelle (20) in Abhängigkeit von dem Auslastungsmaß angibt.

14. Verfahren nach einem der Ansprüche 11 bis 13, wobei die Codeabschnitte der Codefolge in Abhängigkeit des Auslastungsmaßes und einer zu verwendenden Lichtquelle (20) vorcodiert und gespeichert werden und im Betrieb die gespeicherte, vorcodierte Codefolge zur Ansteuerung des Lichtsenders (18) verwendet wird.

**Claims**

1. An optoelectronic sensor (10) having a light transmitter (18) for transmitting transmission light (24), a light receiver (30) for converting detected transmission light (24) into a reception signal as well as a control unit (22, 32) which is configured to control the light transmitter (18) such that the transmission light (24) forms a binary code sequence, in particular a pseudo-random sequence, with logical ones coded as pulses,
**characterized in that**
the control unit (32) is further configured to vary the amplitude of the pulses for code sections of the code sequence in dependence on a workload measure derived from the number of zeros and ones in the code section.

2. The sensor (10) according to claim 1, wherein the control unit (32) is configured to determine, based on the reception signal, the presence or absence of an object (34) in a monitoring area (16) into which the transmission light (24) can be transmitted from the light transmitter (18).

3. The sensor (10) according to claim 1 or 2, wherein the control unit (32) is configured to demodulate the reception signal with the code sequence.

4. The sensor (10) according to any one of the preceding claims, wherein the code sequence is divided into code sections such that each code section comprises a cluster of successive ones and a directly preceding and/or a directly succeeding cluster of successive zeros, or wherein the code sequence is divided into code sections of equal length.

5. The sensor (10) according to any one of the preceding claims, wherein the workload measure of a code section is determined as the ratio of the number of ones or the number of zeros in a code section to the length of the code section.

6. The sensor (10) according to any one of the preceding claims, wherein the light transmitter (18) comprises a light source (20) of a predetermined maximum transmission power, in particular a laser or an LED, and wherein the control unit (22) is configured to vary the amplitude of the pulses in accordance with the predetermined maximum transmission power.

7. The sensor (10) according to any one of the preceding claims,
wherein the control unit (22) is configured to vary the amplitude of the pulses according to an assignment rule which determines a scale factor for a transmission current of the light source (20) in dependence on the workload measure.

8. The sensor (10) according to claim 7,
wherein the assignment rule is determined as an interpolation of several known pairs of values of a predetermined maximum power at a known workload measure.

9. The sensor (10) according to any one of the preceding claims,
wherein a memory is provided in which the code sequence is stored already scaled with the workload measure derived in dependence on the number of zeros and ones in the code section, so that during operation the amplitudes to be varied can be read from the memory by the control unit (22).

10. The sensor (10) according to any one of the preceding claims,
which is configured as a one-way light barrier, a reflection light barrier, a data light barrier, a light scanner, or a light grid.

11. A method for transmitting and receiving light, wherein a light transmitter (18) transmits transmission light (24) as a binary code sequence, in particular a pseudo-random sequence, with ones coded as pulses, and a light receiver (30) converts detected transmission light (24) into a reception signal, **characterized in that**
the amplitude of the pulses is varied for code sections of the code sequence in dependence on a workload measure derived from the number of zeros and ones in the code section.

12. The method according to claim 11,
wherein the transmission light (24) is transmitted into a monitoring area (16) and the presence or absence of an object (34) in the monitoring area (16) is determined based on the reception signal.

13. The method according to claim 11 or 12,
wherein the amplitudes of the pulses are varied according to an assignment rule which determines a transmission current for a light source (20) of the light transmitter (18) in dependence on the workload measure in accordance with a predetermined maximum transmission power of the light source (20).

14. The method according to any one of claims 11 to 13,
wherein the code sections of the code sequence are pre-encoded and stored in dependence on the workload measure and a light source (20) to be used, and wherein during operation the stored, pre-encoded code sequence is used for the control of the light transmitter (18).

**Revendications**

1. Capteur optoélectronique (10) avec un émetteur de lumière (18) pour transmettre de la lumière de transmission (24), avec un récepteur de lumière (30) pour convertir la lumière de transmission détectée (24) en un signal de réception ainsi qu'une unité de commande (22, 32) qui est configurée pour commander l'émetteur de lumière (18) de telle sorte que la lumière de transmission (24) forme une séquence de code binaire, en particulier une séquence pseudo-aléatoire, avec des uns logiques codés sous forme d'impulsions,
**caractérisé en ce que**
l'unité de commande (32) est en outre configurée pour faire varier l'amplitude des impulsions pour des sections de code de la séquence de code en fonction d'une mesure de la charge à partir du nombre des zéros et des uns dans la section de code.

2. Capteur (10) selon la revendication 1, **caractérisé en ce que**
l'unité de commande (32) est configurée pour déterminer, en fonction du signal de réception, la présence ou l'absence d'un objet (34) dans une zone de surveillance (16) dans laquelle la lumière de transmission (24) peut être transmis de l'émetteur de lumière (18).

3. Capteur (10) selon la revendication 1 ou 2, **caractérisé en ce que**

l'unité de commande (32) est configurée pour démoduler le signal de réception avec la séquence de code.

4. Capteur (10) selon l'une quelconque des revendications précédentes, **caractérisé en ce que**
la séquence de code est divisée en sections de code de telle sorte que chaque section de code comprend un groupe des uns suivants et un directement précédent et/ou directement suivant groupe des zéros suivants, ou **en ce que** la séquence de code est divisée en sections de code de longueur égale.

5. Capteur (10) selon l'une quelconque des revendications précédentes, **caractérisé en ce que**
la mesure de la charge d'une section de code est déterminée comme rapport du nombre des uns ou du nombre des zéros dans une section de code à la longueur de la section de code.

6. Capteur (10) selon l'une quelconque des revendications précédentes, **caractérisé en ce que**
l'émetteur de lumière (18) comprend une source de lumière (20) avec une puissance de transmission maximale prédéterminée, en particulier un laser ou une LED, et **en ce que** l'unité de commande (22) est configurée pour faire varier l'amplitude des impulsions conformément avec la puissance de transmission maximale prédéterminée.

7. Capteur (10) selon l'une quelconque des revendications précédentes, **caractérisé en ce que**
l'unité de commande (22) est configurée pour varier l'amplitude des impulsions selon une règle d'affectation qui détermine un facteur d'échelle pour un courant de transmission de la source de lumière (20) en fonction de la mesure de la charge.

8. Capteur (10) selon l'une des revendications 7, **caractérisé en ce que**
la règle d'affectation est déterminée comme une interpolation de plusieurs paires de valeurs connues d'une puissance maximale prédéterminée à une mesure de la charge connue.

9. Capteur (10) selon l'une quelconque des revendications précédentes, **caractérisé en ce que**
une mémoire est prévue, dans laquelle la séquence de code est stockée déjà mis à l'échelle avec la mesure de la charge dérivée en fonction du nombre des zéros et des uns de la section de code, de telle sorte que pendant le service les amplitudes à varier peuvent être lues dans la mémoire par l'unité de commande (22).

10. Capteur (10) selon l'une quelconque des revendications précédentes, **caractérisé en ce que**
le capteur est configuré comme un barrage monofaisceau, un barrage lumineux à réflexion, un barrage lumineux de données, un scanner de lumière, ou un rideaux de lumière de détection.

11. Procédé pour transmettre et recevoir de la lumière, dans lequel un émetteur de lumière (18) transmet la lumière de transmission (24) en séquence de code binaire, en particulier une séquence pseudo-aléatoire, avec des uns codés sous forme d'impulsions, et un récepteur de lumière (30) convertit la lumière de transmission détectée (24) en un signal de réception,
**caractérisé en ce que**
l'amplitude des impulsions est variée pour les sections de code de la séquence de code en fonction d'une mesure de la charge du nombre des zéros et des uns dans la section de code.

12. Procédé selon la revendication 11, **caractérisé en ce que**
la lumière de transmission (24) est transmise dans une zone de surveillance (16) et la présence ou l'absence d'un objet (34) dans la zone de surveillance (16) est déterminée en fonction du signal de réception.

13. Procédé selon la revendication 11 ou 12, **caractérisé en ce que**
les amplitudes des impulsions sont variées selon une règle d'affectation qui détermine une transmission de courant pour une source de lumière (20) de l'émetteur de lumière (18) en fonction de la mesure de la charge conformément à une puissance d'émission maximale prédéterminée de la source de lumière (20).

14. Procédé selon l'une quelconque des revendications 11 à 13, **caractérisé en ce que**
les sections de code de la séquence de code sont précodées et stockées en fonction de la mesure de la charge et d'une source de lumière (20) à être utilisée, et **en ce que** pendant le service la séquence de code précodée et stockée est utilisée pour le contrôle de l'émetteur de lumière (18).

## Figur 1

## Figur 2

| S1 | Ursprüngliche Sendefolge<br>{1,1,1,1,1,1,1,1} |
| S2 | Moduliert mit PN-Code<br>{1,1,-1,1,-1,-1,1,-1} |
| S3 | Unipolar<br>{1,1,0,1,0,0,1,0} |
| S4 | Codeabschnitte<br>{ {1,1,0}; {1,0,0}; {1,0} } |
| S5 | Auslastungsmaße<br>{0,66; 0,33; 0,5} |
| S6 | ==> Skalierungsfaktoren<br>{1,5; 2,5; 1,2} |
| S7 | Sendefolge<br>{1,5; 1,5 ; 0; 2,5 ; 0; 0; 1,2 ;0} |

PN-Code
{1,1,-1,1,-1,-1,1,-1}

| S11 | Decodierte Empfangsfolge<br>{1,1,1,1,1,1,1,1} |
| S10 | Bipolar<br>{1,1,-1,1,-1,-1,1,-1} |
| S9 | Nach Binarisierung<br>{1,1,0,1,0,0,1,0} |
| S8 | Empfangen (rauschfrei)<br>{1,5; 1,5 ; 0; 2,5 ; 0; 0; 1,2 ;0} |

LS1-10

Figur 3

Figur 4

LS1-10

11

## Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2015110 A1